# EUROPEAN PATENT APPLICATION

(11) **EP 2 028 851 A1**
(43) Date of publication of application: **25.02.2009**
(21) Application number: 07016654.1
(22) Date of filing: 24.08.2007
(51) Int. Cl.: H04N 5/46, H04N 5/60

(54) **Audio processing system and related method thereof**

(71) Applicant: Himax Technologies Limited, Fonghua Village Sinshih Township, Tainan County, Taiwan (CN)
(72) Inventor: Tsai, Tien-Ju, Sinshih Township Tainan County (TW); Huang, Chao-Wei, Sinshih Township Tainan County (TW)
(74) Representative: Schaeberle, Steffen

(57) **Abstract**

An audio processing system including: an analog processing unit, for processing one of an analog modulation part of a hybrid audio signal and an analog audio signal to generate an output signal; a decoder, for decoding a digital modulation part of the hybrid audio signal to generate a decoded signal; a multiplexer, coupled to the analog processing unit and the decoder, for outputting the output signal or the decoded signal according to a control signal; a storage device, coupled to the multiplexer, for storing an output of the multiplexer; and a control unit, coupled to the multiplexer, for generating the control signal. A related method is also disclosed.

## Description

### Background of the Invention

### 1. Field of the Invention

The present invention relates to an TV audio processing system and a related method, and particularly relates to an audio processing system capable of processing audio signals of NICAM and other standards and a related method thereof.

### 2. Description of the Prior Art

In order to meet the requirements of various broadcasting standards such as American BTSC, Japan EIA-J, and German A2-BG, a multi-standard TV audio sound processor must always process a multi-channel signal for decimation or filtering. Conventionally, a plurality of registers is replaced with a RAM for the above-mentioned operation.

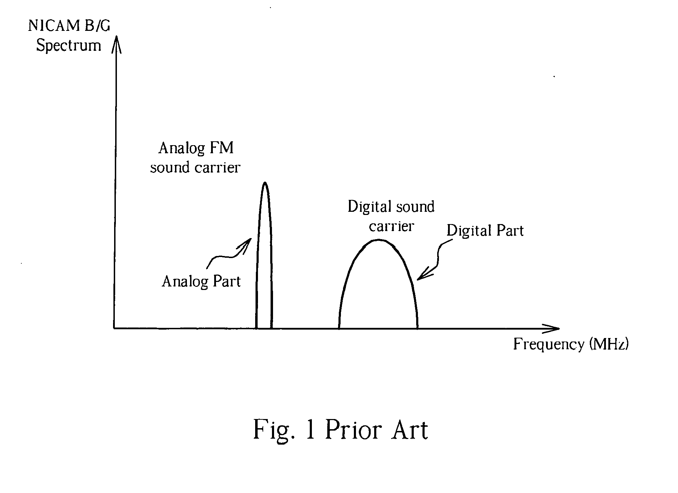

An audio signal following NICAM standard includes an analog modulation part and a digital modulation part, as shown in Fig.1. For audio signals of other standards, the analog modulation part of the NICAM audio signal is processed. Also, the digital modulation part of a NICAM audio signal is processed by a DQPSK (Differential Quadrature Phase Shift Keying) decoder, and then processed by a NICAM decoder to generate audio data.

Since the analog modulation part of a NICAM audio signal only includes a single mono channel, it is not always necessary to utilize the entire space of the RAM for storing the analog modulation part. Therefore, the idle RAM space is wasted.

### Summary of the Invention

Thus, one objective of the present invention is to provide an audio processing system and a related method, which utilize a single RAM to jointly store an audio signal of NICAM and other standards.

One embodiment of the present invention discloses an audio processing system, which comprises: an analog processing unit, for processing one of an analog modulation part of a hybrid audio signal and an analog audio signal to generate an output signal; a decoder, for decoding a digital modulation part of the hybrid audio signal to generate a decoded signal; a multiplexer, coupled to the analog processing unit and the decoder, for outputting the output signal or the decoded signal according to a control signal; a storage device, coupled to the multiplexer, for storing an output of the multiplexer; and a control unit, coupled to the multiplexer and the storage device, for generating the control signal.

Another embodiment of the present invention discloses an audio processing method corresponding to the above-mentioned system. The method includes:(a) processing an analog modulation part of a hybrid audio signal and an analog audio signal to generate an output signal; (b) decoding the digital modulation part to generate a decoded signal; (c) outputting the output signal or the decoded signal selectively; and (d) storing an output of the step (c).

Another embodiment of the present invention discloses an audio processing system of a television, which comprises: an analog processing unit, for processing an analog modulation part of an audio signal to generate a first output signal; a digital processing unit, for processing a digital modulation part of the audio signal to generate a second output signal; a multiplexer, coupled to the analog processing unit and the digital processing unit, for outputting the first output signal or the second output signal according to a control signal; a storage device, coupled to the multiplexer, for storing an output of the multiplexer; and a control unit, coupled to the multiplexer, for generating the control signal.

Another embodiment of the present invention discloses an audio processing method corresponding to the above-mentioned system. The method includes: (a) processing an analog modulation part of an audio signal to generate a first output signal; (b) processing a digital modulation part of the audio signal to generate a second output signal when the audio signal includes the digital modulation part; (c) outputting the first output signal or the second output signal selectively; and (d) storing an output of the step (c).

These and other objectives of the present invention will no doubt become obvious to those of ordinary skill in the art after reading the following detailed description of the preferred embodiment that is illustrated in the various figures and drawings.

### Brief Description of the Drawings

- Fig.1: illustrates a prior art NICAM audio signal.
- Fig.2: is an audio processing system according to an embodiment of the present invention.
- Fig.3: is an audio processing method corresponding to the audio processing system shown in Fig.2.
- Fig.4: is an audio processing system according to an embodiment of the present invention.
- Fig.5: is an audio processing method corresponding to the audio processing system shown in Fig.4.
- Fig.6: is a schematic diagram illustrating an audio frame after interleaving.
- Fig.7: is a schematic diagram illustrating a data configuration for stereo audio.
- Fig.8: is a schematic diagram illustrating a data configuration for monaural audio.

### Detailed Description

Certain terms are used throughout the description and following claims to refer to particular components. As one skilled in the art will appreciate, electronic equipment manufacturers may refer to a component by different names. This document does not intend to distinguish between components that differ in name but not function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

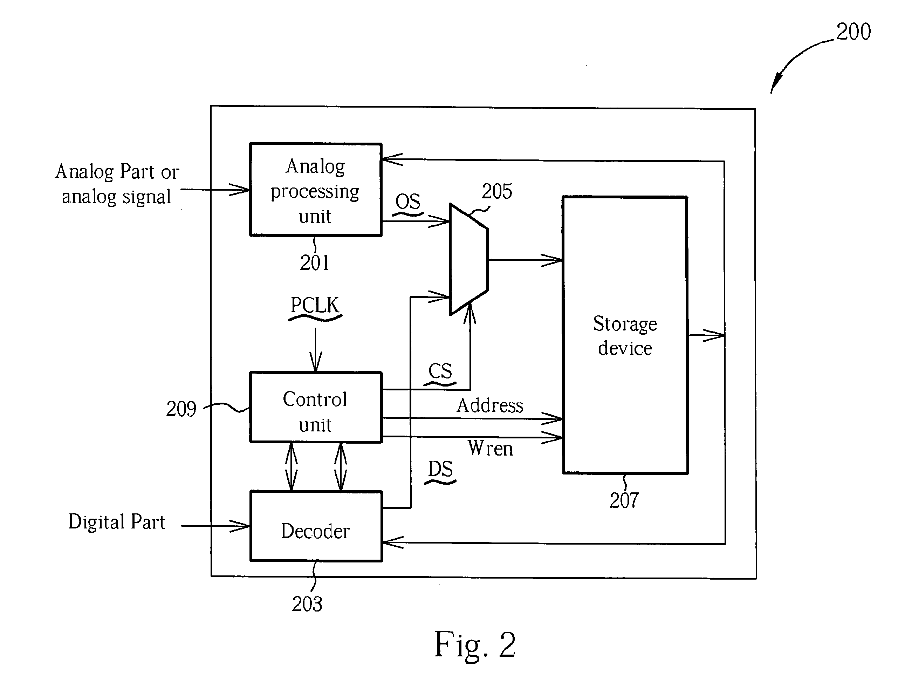

Fig.2 is an audio processing system 200 according to an embodiment of the present invention. As shown in Fig.2, the audio processing system 200 includes an analog processing unit 201, a decoder 203, a multiplexer 205, a storage device 207 and a control unit 209. The analog processing unit 201 is used for processing one of an analog modulation part of a hybrid audio signal (for example, an analog modulation signal with a NICAM audio signal), and an analog audio signal to generate an output signal OS. The decoder 203 is used for decoding a digital modulation part of the hybrid audio signal to generate a decoded signal DS. The multiplexer 205 is used for outputting the output signal OS or the decoded signal DS according to a control signal CS. The storage device 207 (for example, a RAM) is used for storing an output of the multiplexer 205. The control unit 209 is used for generating the control signal CS.

If the hybrid audio signal is with a NICAM audio signal, the decoder 203 is a NICAM decoder. Also, if the hybrid audio signal is with a NICAM audio signal, the decoder 203 can be coupled to a DQPSK decoder, as described above. In this case, the digital modulation part is processed by the DQPSK decoder before entering the decoder 203, therefore per data amount received by the decoder 203 is 2-bits. Normally, the digital modulation part is interleaved before entering the decoder 203, and the decoder 203 is used for de-interleaving the digital modulation part to generate the decoded signal DS, such that the audio data can be obtained. Details of the interleaving and de-interleaving operations will be described later.

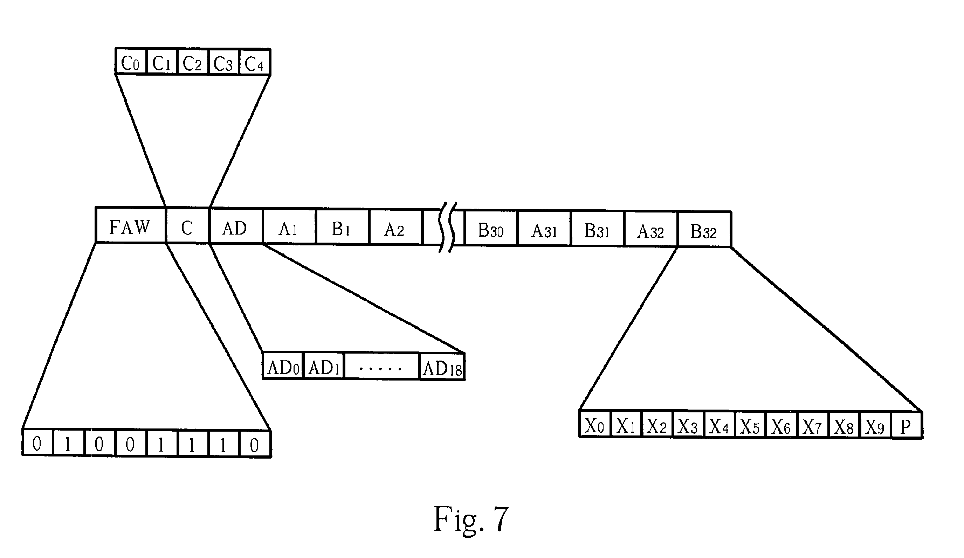

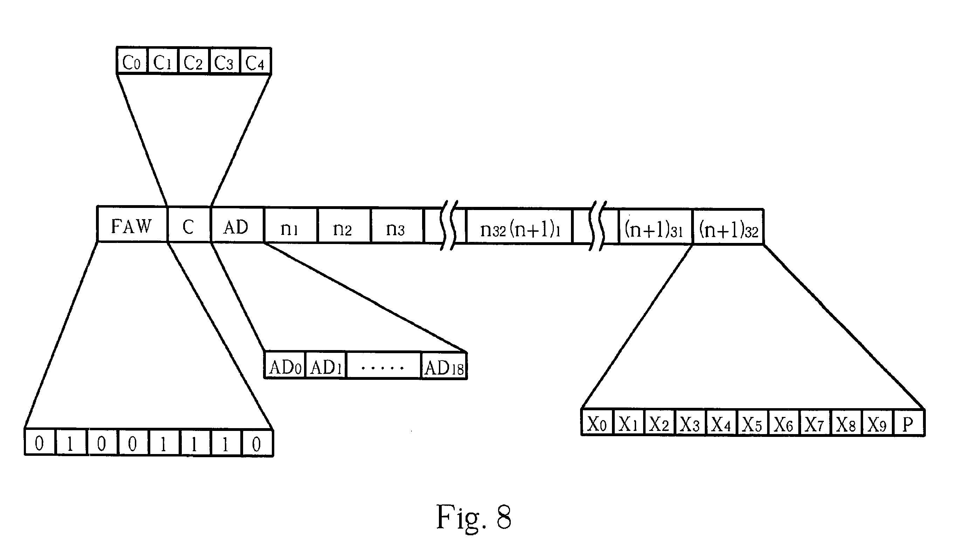

The detailed operation of the NICAM decoder can be summarized as follows:
1. Raw data stream of 728 kbits/sec is transmitted to the NICAM decoder from the DQPSK decoder.
2. Search 8 bit FAW (Frame Alignment Word) to find the beginning of each frame. The detailed data configuration of NICAM audio signal will be described in Fig.7 and Fig.8.
3. Perform an XOR operation on each bit after FAW and pseudo-random sequence to recover real data. The control bits (Cl) and the additional data bits (AD) will also be decoded.
4. Utilize a RAM to de-interleave the final 704 bits of the frame.
5. Perform parity check on data, and find out scale factor. Then de-compress audio data according to the scale factor.
6. Store the audio data to the storage device in time sequence, such that the following stage can utilize it.

The detailed operation of the NICAM decoder is well known by persons skilled in the art. Therefore the above-mentioned steps are only given as examples and are not meant to limit the scope of the present invention.

The analog audio signal can complies with one of the following standards: BTSC, EIA-J, and A2. In this embodiment, the analog processing unit 201 is a decimation filter, which receives the digital modulation part of the hybrid audio signal or the analog audio signal processed by an analog to digital converter.

In this embodiment, the control unit 209 controls the storage device 207 according to accessing requirements from the decoder 203.

Alternatively, the control unit 209 receives a predetermined clock signal PCLK, and generates the control signal CS according to clock cycles of the predetermined clock signal PCLK. Such a mechanism is always utilized in an audio signal processing system, and thus is omitted for brevity here.

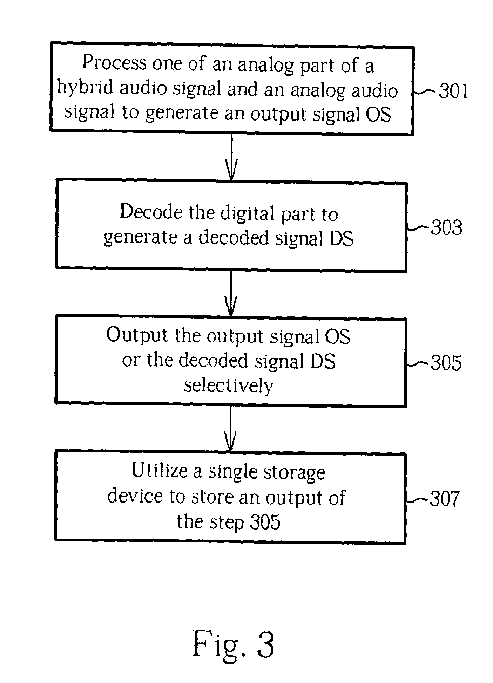

Fig.3 is an audio processing method corresponding to the audio processing system shown in Fig.2. The audio processing method includes:
Step 301
   Process one of an analog modulation part of a hybrid audio signal and an analog audio signal to generate an output signal OS.
Step 303
   Decode the digital modulation part to generate a decoded signal DS.
Step 305
   Selectively output the output signal OS or the decoded signal DS.
Step 307
   Utilize a single storage device to store an output of the step 303.

Other characteristics can be easily obtained from the description of Fig.2, and thus are omitted here for brevity.

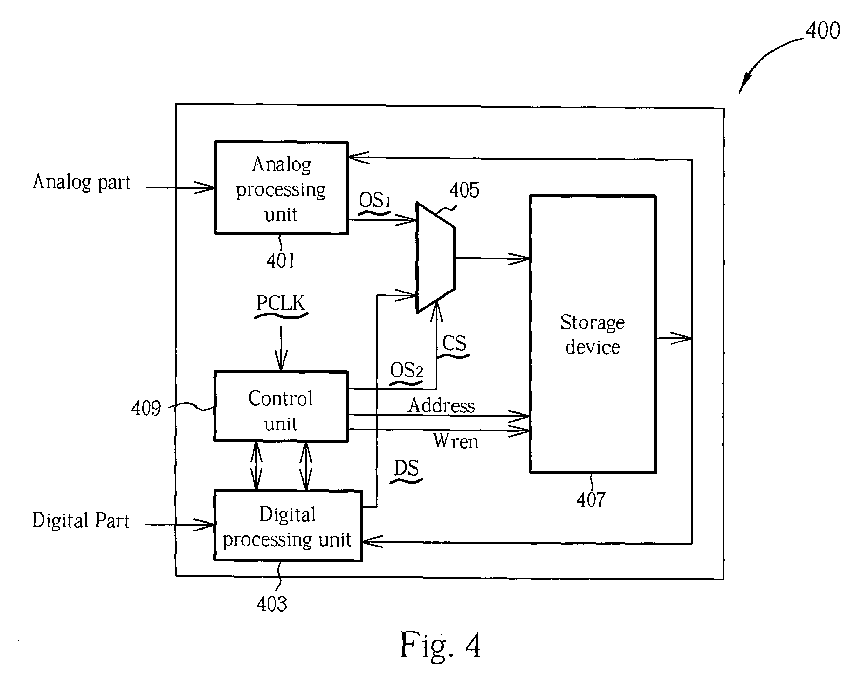

There is another aspect for illustrating the operation of the audio signal processing system. Please refer to Fig.4, which illustrates the audio processing system 400 according to the embodiment of the present invention. The audio processing system 400 includes the same elements as the audio processing system 200, the only difference between the audio processing system 400 and the audio processing system 200 being the operation.

As shown in Fig.4, the audio processing system 400 includes an analog processing unit 401, a digital processing unit 403 (the decoder 203), a multiplexer 405, a storage device 407 and a control unit 409. The analog processing unit 401 is used for processing an analog modulation part of an audio signal to generate a first output signal OS₁. The digital processing unit 403 is used for processing a digital modulation part of the audio signal to generate a second output signal OS₂. The multiplexer 405 is used for outputting the first output signal OS₁ or the second output signal OS₂ according to a control signal CS. The storage device 407 is used for storing an output of the multiplexer 405. The control unit 409 is used for generating the control signal CS. Therefore, according to the present embodiment, the first output signal OS₁ can be generated from a hybrid audio signal such as an analog audio signal, and the second output signal OS₂ can be generated from the hybrid audio signal.

Other characteristics of the audio processing system 400 are already explained in the description of the audio processing system 200, and thus are omitted for brevity.

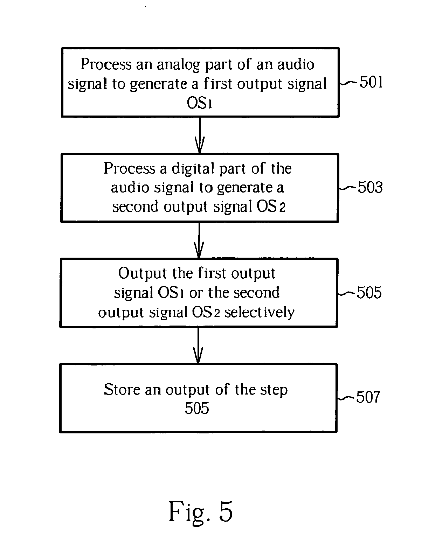

Fig.5 is an audio processing method corresponding to the audio processing system shown in Fig.4. The audio processing method includes:
Step 501
   Process an analog modulation part of an audio signal to generate a first output signal OS₁.
Step 503
   Process a digital modulation part of the audio signal to generate a second output signal OS2.
Step 505
   Selectively output the first output signal OS₁ or the second output signal OS₂.
Step 507
   Utilize a single storage device to store an output of the step 505.

Other characteristics of the method shown in Fig.5 can be easily obtained from the description of Figs.2, 3 and 4, and thus are omitted here for brevity.

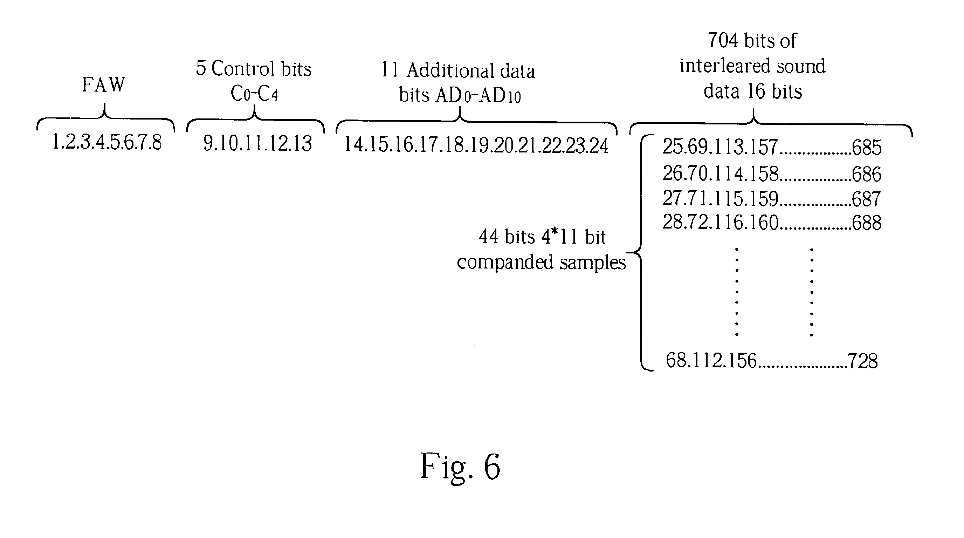

Fig.6 is a schematic diagram illustrating an audio frame after interleaving. As shown in Fig.6, the 8-bit FAW (frame alignment word) is used for identifying the beginning of each frame, and the final 704 bits are interleaved in the order 25, 69, 113.

The data configuration of the NICAM audio signal (consisting of a 728-bit frame) will be described with reference to Figs. 7 and 8. Fig.7 is a schematic diagram illustrating a data configuration for stereo audio, and Fig.8 is a schematic diagram illustrating a data configuration for monaural audio. Referring to Fig.7, one frame of stereo audio starts with an FAW (Frame Alignment Word) consisting of eight bits, followed by control bits C consisting of one frame flag bit C0, three application control bits C1 through C3, and one reserve audio switching flag C4, additional data AD to be transmitted along with the audio signal, and audio data A1, B1, ... A32, B32 of channels A and B, in this order, amounting to a total of 728 bits. Similarly, one frame of monaural audio shown in Fig.8 starts with an FAW consisting of eight bits, followed by control bits C consisting of one frame flag bit C0, three application control bits C1 through C3, and one reserve audio switching flag C4, additional data AD to be transmitted along with the audio signal, and monaural audio data n1, n2, ... (n+1)31, (n+1)32, in this order, amounting to a total of 728 bits.

In the above-mentioned NICAM audio signal, a maximum of two channels of audio information can be transmitted. The audio information is transmitted in one of the following three combinations:
(1) Stereo audio signal;
(2) two independent monaural audio signals (so-called dual mono); and
(3) monaural audio signal plus data.

The combinatorial information is assigned to the control bits C shown in Fig. 7 and 8. The information regarding the relationship with analog FM/AM audio is also assigned to the reserve audio switching flag C4. If analog audio (FM/AM) and NICAM audio represent the same program, the reserve audio switching flag C4 is set to "H" (High); if analog audio (FM/AM) and NICAM audio represent two different programs, the flag C4 is set to "L" (Low). In the digital audio broadcast apparatus, switching points between analog audio and NICAM audio are changed based on the information of the flag C4.

The contents of Figs. 6 ∼ 8 are well known by persons skilled in the art, therefore corresponding detailed descriptions are omitted for brevity.

According to the above-mentioned system and structure, idle space in the storage device can be utilized by the NICAM decoder. Therefore the storage device can be utilized as: a buffer for de-interleaving; a device for balancing the time difference of two channels M1, M2 (if a bilingual program is transmitted); and a device to store data for the next stage. Therefore the area of the system can decrease, and the application of the system can increase. It should be noted that the concept disclosed by the present invention not only can be utilized with a NICAM audio signal but can also be utilized with a hybrid audio signal with an analog modulation part and a digital modulation part.

Those skilled in the art will readily observe that numerous modifications and alterations of the device and method may be made while retaining the teachings of the invention.

## Claims

1. An audio processing system, comprising:
an analog processing unit, for processing one of an analog modulation part of a hybrid audio signal, and an analog audio signal to generate an output signal;
a decoder, for decoding a digital modulation part of the hybrid audio signal to generate a decoded signal;
a multiplexer, coupled to the analog processing unit and the decoder, for outputting the output signal or the decoded signal according to a control signal;
a storage device, coupled to the multiplexer, for storing an output of the multiplexer; and
a control unit, coupled to the multiplexer, for generating the control signal.

2. The audio processing system of claim 1, wherein the digital modulation part is interleaved before entering the decoder, and the decoder is used for de-interleaving the digital modulation part to generate the decoded signal.

3. The audio processing system of claim 1, wherein the hybrid audio signal complies with a NICAM standard, and the decoder is a NICAM decoder.

4. The audio processing system of claim 1, wherein the decoder is coupled to a DQPSK (Differential Quadrature Phase Shift Keying) decoder, and the digital modulation part is processed by the DQPSK decoder before entering the decoder.

5. The audio processing system of claim 1, wherein the analog processing unit is a decimation filter.

6. The audio processing system of claim 1, wherein the analog audio signal complies with one of the standards of BTSC, EIA-J, and A2-BG.

7. The audio processing system of claim 1, wherein the control unit is further coupled to the storage device and the decoder, and further controls the storage device according to accessing requirements from the decoder.

8. The audio processing system of claim 1, wherein the control unit receives a predetermined clock signal, and generates the control signal according to clock cycles of the predetermined clock signal.

9. An audio processing system of a television, comprising:
an analog processing unit, for processing an analog modulation part of an audio signal to generate a first output signal;
a digital processing unit, for processing a digital modulation part of the audio signal to generate a second output signal;
a multiplexer, coupled to the analog processing unit and the digital processing unit, for outputting the first output signal or the second output signal according to a control signal;
a storage device, coupled to the multiplexer, for storing an output of the multiplexer; and
a control unit, coupled to the multiplexer, for generating the control signal.

10. The audio processing system of claim 9, wherein the decoder is a NICAM decoder.

11. The audio processing system of claim 9, wherein the analog processing unit is a decimation filter.

12. The audio processing system of claim 9, wherein the decoder is coupled to a DQPSK (Differential Quadrature Phase Shift Keying) decoder, and the digital modulation part is processed by the DQPSK decoder before entering the decoder.

13. The audio processing system of claim 9, wherein the control unit is further coupled to the storage device and the decoder, and further controls the storage device according to accessing requirements from the decoder.

14. The audio processing system of claim 9, wherein the control unit receives a predetermined clock signal, and generates the control signal according to clock cycles of the predetermined clock signal.

15. An audio processing method, comprising:
(a) processing one of an analog modulation part of a hybrid audio signal, and an analog audio signal to generate an output signal;
(b) decoding the digital modulation part to generate a decoded signal;
(c) outputting the output signal or the decoded signal selectively; and
(d) utilizing a single storage device to store an output of the step (c).

16. The audio processing method of claim 15, wherein the digital modulation part is interleaved before the step (b), and the step (b) is used for de-interleaving the digital modulation part to generate the decoded signal.

17. The audio processing method of claim 15, wherein the hybrid audio signal complies with a NICAM standard.

18. The audio processing method of claim 15, wherein, and the digital modulation part is processed by a DQPSK decoder before the step (b).

19. The audio processing method of claim 15, wherein the analog audio signal complies with one of the standards of BTSC, EIA-J, and A2-BG.
